# EUROPÄISCHE PATENTANMELDUNG

(11) **EP 2 871 344 A1**
(43) Veröffentlichungstag der Anmeldung: **13.05.2015**
(21) Anmeldenummer: 13075072.2
(22) Anmeldetag: 07.11.2013
(51) Int. Cl.: F02B 37/00, F01B 1/08, F02B 75/24, F01N 13/10

(54) **Boxermotor**

(71) Anmelder: Dyakov, Sergey Vasilyevich, 040932 Nurlitau (KZ)
(72) Erfinder: Dyakov, Sergey Vasilyevich, 040932 Nurlitau (KZ)
(74) Vertreter: Kietzmann, Manfred

(57) **Zusammenfassung**

Die Erfindung bezieht sich auf einen Boxermotor, insbesondere auf einen Viertaktmotor mit horizontaler Zylinderanordnung, zum Einsatz in Transportmitteln, vorzugsweise mit Front- oder Mittelmotorbauweise.

Bei einem Boxermotor, bei dem die Zylinder horizontal in zwei Bänken auf einander entgegengesetzten Seiten des Kurbelgehäuses angeordnet sind und jede Zylinderbank einen Zylinderkopf mit Einlass- und Auslasskanälen aufweist, wobei die Einlasskanäle unterhalb und die Auslasskanäle oberhalb des Zylinderkopfs angeordnet sind, der Abgaskrümmer mit den Auslasskanälen des Zylinderkopfs in Verbindung steht, über dem Gehäuse zumindest ein Turbolader mit einem Abgaskatalysator, der eine Turbine und einen Verdichter umfasst, angeordnet ist, wobei der Abgaskrümmer mit der Turbine des Turboladers verbunden ist, wird vorgeschlagen, den (die) Turbolader entlang der Kurbelwellenachse anzuordnen und den Abgaskrümmer in Form zweier separater Abgaskrümmer, jeweils einen für jeden Zylinderkopf, auszuführen, wobei jeder der Krümmer mit der Turbine des Turboladers bzw. den Turbinen der Turbolader verbunden ist.

Der vorgeschlagene Aufbau des Verbrennungsmotors mit einander gegenüberliegenden Zylindern erlaubt es, die Kraftstoffeffizienz zu steigern und die spezifische Leistung zu erhöhen, den Wirkungsgrad des Turboladesystems zu verbessern, den CO₂-Ausstoß zu senken, bauliche Widersprüche im Zusammenhang mit der Erhöhung der Turboladeranzahl und der Verringerung der Motorzylinder zu lösen, den Aufbau zu vereinfachen und das Wärmedämmungspotential aufgeheizter Bauteile zu erhöhen.

## Beschreibung

Die Erfindung bezieht sich auf einen Boxermotor, insbesondere auf einen Viertaktmotor mit horizontaler Zylinderanordnung, zum Einsatz in Transportmitteln, vorzugsweise mit Front- oder Mittelmotorbauweise.

Bekannt ist ein Boxermotor mit horizontaler Anordnung der Zylinder, welcher mit einem Turboladesystem mit Ladeluftkühlung und einem Abgaskatalysator ausgestattet ist. Zwei Turbolader sind anhand eines Abgaskrümmers unter ihrem jeweiligen Zylinderkopf angeordnet, wobei die Turboladerachse parallel zur Kurbelwellenachse ist. Der Ladeluftkühler befindet sich über dem Motor oder vor dem Kühlradiator des Motors. Der Abgaskatalysator ist über das Abgasrohrsystem mit der Turbine des Turboladers verbunden (JP2003247423A).

Der bekannte Motor weist folgende Mängel auf: Aufgrund der Anordnung des Turboladers unter dem Motor und des Ladeluftkühlers über dem Motor weist der Aufbau lange Ladeluftleitungen mit zahlreichen Krümmungen auf, was zu einer Verringerung des Wirkungsgrads des Turboladesystems führt. Ein weiterer Mangel besteht darin, dass der Katalysator in einem deutlichen Abstand zum Turbolader angeordnet ist, was aufgrund der Abkühlung der Abgase eine Verringerung seiner Leistungseffizienz zur Folge hat. Darüber hinaus ist durch die Anordnung des Turboladers unter den Zylinderköpfen der Einsatz eines eigenständigen Systems zur Turboladerschmierung erforderlich und zudem muss der Antriebsstrang höher angeordnet sein, was zu einer Erhöhung des Massenschwerpunkts des Transportmittels führt.

Die der beanspruchten Erfindung am nächsten kommende technische Lösung ist ein Boxermotor mit horizontaler Anordnung der Zylinderbänke, der Zylinderköpfe und ein Kurbelgehäuse umfasst. Die Abgasleitungen beider Zylinderbänke sind in eine gemeinsame Sammelleitung zusammengeführt, die über dem Kurbelgehäuse angeordnet ist. Der Motor umfasst zumindest einen Turbolader mit einer Turbine und einem Verdichter, der über dem Gehäuse in einem Winkel von 90° zur Kurbelwellenachse angeordnet ist. Der Abgaskatalysator ist anhand einer Zwischenverbindungsleitung mit dem Turbolader verbunden. Der Aufbau sieht eine Wärmedämmung mit einem System zur Kühlung des Turboladers, des Abgaskrümmers und des Abgaskatalysators vor, das aus einer mehrschichtigen Außenhülle, einem Luftmantel und einem Lüfter besteht (DE102010036303A1).

Das Vorhandensein eines gemeinsamen Abgassammlers, der die einander gegenüberliegenden Zylinderköpfe verbindet, erfordert angesichts der baulichen Besonderheit des Boxermotors eine Verlängerung der Leitungen des Abgaskrümmers, was zu einer Senkung des Nutzungsgrads der kinetischen Energie der Abgase zum Antrieb der Turboladerturbinen führt und sich in einer Verringerung des Wirkungsgrads des Turboladesystems, d. h. in einer Verringerung der spezifischen Leistung und einer Verschlechterung der Kraftstoffeffizienz, niederschlägt.

Bei dem in Bezug auf die rechte und linke Seite des Motors asymmetrischen Anordnungsschema des Turboladers in Verbindung mit der Anordnung in einem Winkel von 90° zur Kurbelwellenachse ist zum Ausgleich der Unregelmäßigkeit eine Verlängerung der Ladeluftleitung erforderlich, was zu einem unerwünschten Abfall des Ladedrucks führt und zu einer Erhöhung des Kraftstoffverbrauchs beiträgt.

Die Sammelleitung zur Verbindung des Abgaskatalysators mit dem Turbolader beeinträchtigt aufgrund des Abgastemperaturverlustes die Leistungseffizienz des Katalysators, was zu einer Erhöhung des CO₂-Ausstoßes führt.

Darüber hinaus führt der Einsatz der Wärmedämmung mit einem System zur Kühlung des Abgaskrümmers, des Turboladers und des Abgaskatalysators zu einer Verringerung der Temperatur und somit der kinetischen Energie der Abgase, was sich in einer Verringerung der Produktivität der Turboladerturbinen und der Leistungseffizienz des Abgaskatalysators niederschlägt. Ferner ist festzustellen, dass dieser Motoraufbau in praktischer Hinsicht keine Bauweise mit drei Turboladern erlaubt.

Die Aufgabe des vorliegenden Gebrauchsmusters besteht darin, die Kraftstoffeffizienz und die spezifische Leistung eines Verbrennungsmotors mit einander gegenüberliegenden, horizontal angeordneten Zylindern zu steigern, den Wirkungsgrad des Turboladesystems zu erhöhen, den CO₂-Ausstoß zu senken, bauliche Widersprüche im Zusammenhang mit der Erhöhung der Turboladeranzahl und der Verringerung der Zylinderanzahl des Motors zu lösen, den Aufbau zu vereinfachen und das Wärmedämmpotenzial aufgeheizter Bauteile zu erhöhen.

Zur Lösung dieser Aufgabe wird bei einem Boxermotor, bei dem die Zylinder horizontal in zwei Bänken auf einander entgegengesetzten Seiten des Kurbelgehäuses angeordnet sind und jede Zylinderbank einen Zylinderkopf mit Einlass- und Auslasskanälen aufweist, wobei die Einlasskanäle unterhalb und die Auslasskanäle oberhalb des Zylinderkopfs angeordnet sind, der Abgaskrümmer mit den Auslasskanälen des Zylinderkopfs in Verbindung steht, zumindest ein Turbolader mit einem Abgaskatalysator, der eine Turbine und einen Verdichter umfasst, über dem Gehäuse angeordnet ist, wobei der Abgaskrümmer mit der Turbine des Turboladers verbunden ist, vorgeschlagen, den (die) Turbolader entlang der Kurbelwellenachse anzuordnen und den Abgaskrümmer in Form zweier separater Abgaskrümmer, jeweils einen für jeden Zylinderkopf, auszuführen, wobei jeder der Krümmer mit der Turbine des Turboladers bzw. den Turbinen der Turbolader verbunden ist.

Ein Boxermotor ist mit zwei Turboladern ausgestattet, wobei die Abgaskrümmer der Zylinderköpfe mit den Turbinen der entsprechenden Turbolader verbunden sind.

Ein Boxermotor mit einem zentralen Turbolader ist zusätzlich mit zwei weiteren Turboladern ausgestattet, deren Turbine jeweils mit einem entsprechenden Zylinderkopf-Abgaskrümmer ausgestattet ist.

Beim Boxermotor sind die beiden Turbolader symmetrisch in einem Winkel von 0 - 40° zur Kurbelwellenachse angeordnet.
Beim Boxermotor ist der Abgaskatalysator unmittelbar und ohne Zwischenleitung mit dem Turbolader verbunden.

Beim Boxermotor sind aufgeheizte Bauteile, insbesondere die Abgaskrümmer, der (die) Turbolader und der Abgaskatalysator, mit einer Wärmedämmung ausgestattet, die in unmittelbarem Kontakt mit den aufgeheizten Bauteilen steht.

Beim Boxermotor ist der Ansaugkrümmer in zwei Teile für jeden Zylinderkopf untergliedert und beide Teile sind durch einen Luftkanal, welcher Druckunterschiede ausgleicht, miteinander verbunden.

Beim Boxermotor ist der Verdichter des Turboladers (der Turbolader) über zumindest einen Ladeluftkühler mit einem separaten Teil des Ansaugkrümmers für jeden Zylinderkopf verbunden.

Gemäß der Erfindung ist der Abgaskrümmer in Form zweier separater Zylinderkopf-Abgaskrümmer ausgeführt, wovon jeder mit der Turbine des Turboladers bzw. den Turbinen der Turbolader verbunden ist, d. h. jeder Abgaskrümmer ist über seinem jeweiligen Zylinderkopf angeordnet, wodurch der Auslassabschnitt von den Auslasskanälen der Zylinderköpfe bis zur Turbine des Turboladers bzw. den Turbinen der Turbolader so kurz wie möglich und geradlinig ausgeführt werden kann, was eine maximale Ausnutzung des thermodynamischen Potenzials und der Impulsenergie der Abgase und somit eine Erhöhung des Wirkungsgrads des Turboladers ermöglicht, was sich in einer Steigerung der Kraftstoffeffizienz und einer Erhöhung der spezifischen Leistung niederschlägt. Darüber hinaus ermöglicht der in zwei eigenständige Teile untergliederte Abgaskrümmer kraft seiner Kompaktheit eine Verringerung der thermomechanischen Belastung des Zylinderkopfes und insbesondere des Krümmers selbst.

Beim Einsatz eines gemeinsamen Turboladers für zwei separate, d. h. nicht unmittelbar miteinander verbundene, Abgaskrümmer wird ein sogenannter Twin-Scroll-Lader mit zwei eigenständigen Abgaseinlassstutzen verwendet. Beim Einsatz zweier Turbolader oder zweier zusätzlicher Turbolader sind die Turbolader aufgrund von baulichen Anforderungen und der Notwendigkeit, die Länge der Ladeluftleitungen zu verringern, symmetrisch in einem Winkel von 0 - 40° zur Kurbelwellenachse angeordnet. Beim Einsatz mehrerer Turbolader kann das Turboladesystem ein entsprechendes paralleles oder stufenförmiges Schema aufweisen.

Der vorgeschlagene Aufbau des Boxermotors, bei dem der (die) Turbolader entlang der Kurbelwellenachse angeordnet ist (sind) und zumindest ein Ladeluftkühler in unmittelbarer Nähe des Antriebsstrangs angeordnet ist, ermöglicht es, die Länge des Einlassabschnitts zu verringern und ihn maximal geradlinig zu gestalten, was eine Verringerung des Ladedruckabfalls im Ansaugkrümmer und eine Reaktionslinearität bei der Kraftstoffzufuhr, d. h. eine Steigerung des Wirkungsgrads des Turboladers, ermöglicht, wodurch gleichermaßen die spezifische Leistung erhöht und gleichzeitig der Kraftstoffverbrauch gesenkt werden, was sich in der Verringerung des CO₂-Ausstoßes entsprechend widerspiegelt.

Der Abgaskatalysator muss so nah wie möglich am Turbolader angeordnet sein, um die Temperatur der Abgase in vollem Umfang ausnutzen zu können; beim vorliegenden Schema ist der Katalysator unmittelbar und ohne unnötige zusätzliche Zwischenleitungen mit dem Turbolader verbunden, wodurch er sich schneller auf die Betriebstemperatur bringen lässt und früher in Betrieb gehen kann, wodurch sich wiederum der CO₂-Ausstoß senken lässt.

Für die aufgeheizten Bauteile des Abgassystems, insbesondere den Abgaskrümmer des Turboladers (der Turbolader) und den Katalysator, ist der Einsatz von Wärmedämmstoffen, die in unmittelbarem Kontakt mit den aufgeheizten Bauteilen stehen, und nicht, wie beim Prototyp, einer Wärmedämmung mit einem System zur Kühlung der aufgeheizten Bauteile vorgesehen. Dank dieser Maßnahme lassen sich die Temperatur und dementsprechend die kinetische Energie der Abgase aufrechterhalten, damit diese ihr Potenzial in der Turboladerturbine und im Abgaskatalysator umsetzen können; darüber hinaus wird durch die Wärmedämmung der obengenannten Bauteile ohne natürliche Konvektionskühlung durch den eintretenden Luftstrom während der Fahrt eine Abmilderung der Temperaturverhältnisse im Motorraum ermöglicht.

Die Verwendung eines in zwei Teile, d. h. in jeweils einen eigenständigen Teil für jeden Zylinderkopf, untergliederten Ansaugkrümmers ist durch die Option der Verringerung der lichten Höhe des Ansaugstrangs bedingt, allerdings ist zum Ausgleich einer eventuellen unwesentlichen Druckdifferenz in den Ansaugkrümmern die Verwendung eines Luftverbindungskanals vorgesehen.

Der vorgeschlagene Aufbau des Boxermotors der beschriebenen Bauweise, bei welcher der Turbolader entlang der Kurbelwellenachse angeordnet ist, eignet sich für den Einsatz von drei Turboladern; es ist aber auch gelungen, ihn auf Grundlage einer Dimensionsanalyse bekannter horizontaler Boxenmotoren von Herstellern, wie Porsche, Subaru, sowie von Turboladern der Hersteller Garret oder KKK, für Motoren mit mindestens vier Zylindern vorzusehen.

Dank der Anordnung des Turboladers (der Turbolader) über dem Kurbelgehäuse ist es gelungen, den Turbolader in das standardmäßige Schmiersystem des Motors zu integrieren, wodurch die Notwendigkeit eines eigenständigen Schmiersystems, wie sie bei der diesem Gebrauchsmuster am nächsten kommenden technischen Lösung besteht, entfällt.

Die Erfindung soll anhand der Zeichnungen erläutert werden.

Es zeigen:
Fig. 1 eine schematische Darstellung des Boxermotors gemäß dem Stand der Technik;
Fig. 2 eine schematische Darstellung einer Ausführungsform des beanspruchten Boxermotors mit einem Turbolader;
Fig. 3 eine schematische Darstellung einer Ausführungsform des beanspruchten Boxermotors mit zwei Turboladern;
Fig. 4 eine schematische Darstellung einer Ausführungsform des beanspruchten Boxermotors mit zwei Turboladern, die in einem Winkel von 0 - 40° zur Kurbelwellenachse angeordnet sind.

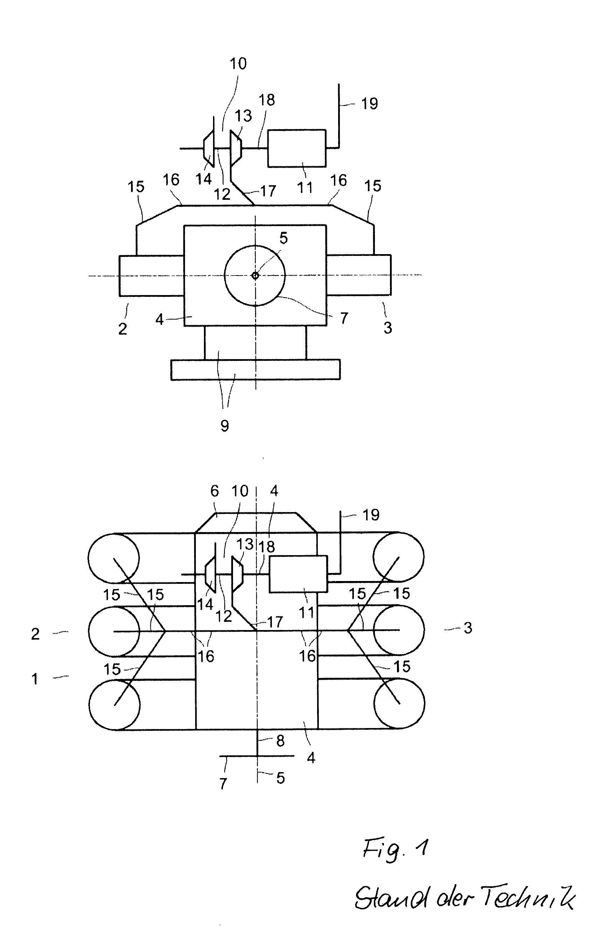

**Fig. 1** zeigt eine Ausführungsform des Standes der Technik wie er einleitend beschrieben wurde.

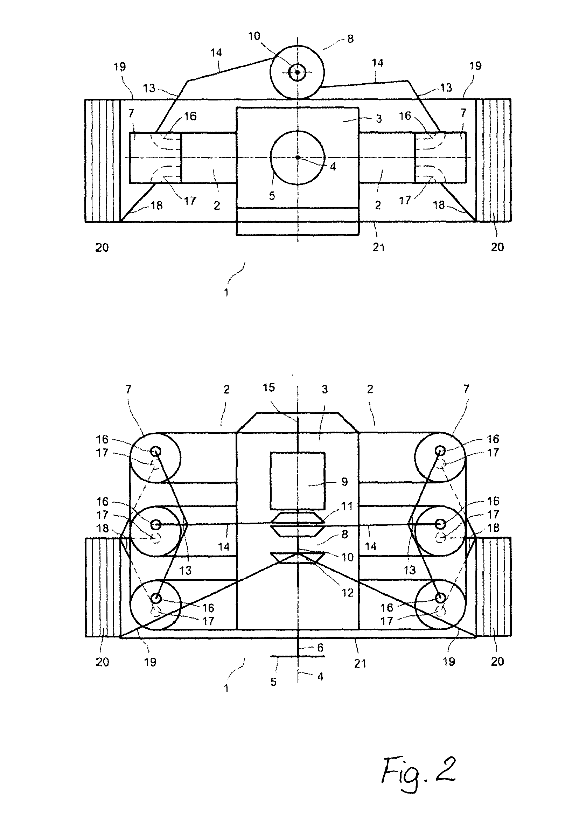

**Fig. 2** zeigt den vorgeschlagenen Boxermotor 1, bei dem die Zylinder in zwei Bänken 2 auf einander entgegengesetzten Seiten des Gehäuses 3 mit der Kurbelwelle 6 angeordnet sind und jede Zylinderbank 2 einen Zylinderkopf 7 aufweist. Die Kurbelwellenachse ist durch eine Strich-Punkt-Linie dargestellt und mit dem Bezugszeichen 4 versehen. Der vordere Teil des Motors ist durch die Riemenscheibe 5 definiert.

Oberhalb des Gehäuses 3 des Motors 1 befindet sich der Turbolader 8, der so angeordnet ist, dass sich die Turboladerachse 11 entlang der Kurbelwellenachse 4 erstreckt. Beim Einsatz eines gemeinsamen Turboladers für zwei separate Abgaskrümmer 13 weist die Turbine 11 des Turboladers 8 zwei unabhängige Kanäle für den Einlass der Abgase durch die Turbinenstutzen 14 auf. Die Turbine 11 des Turboladers 8 ist unmittelbar mit dem Abgaskatalysator 9 verbunden; auf der anderen Seite ist das Abgasrohr 15 am Abgaskatalysator 9 befestigt.

Die Zylinderköpfe 7 verfügen über nach oben austretende Auslasskanäle 16 und unten eintretende Einlasskanäle 17, d. h. dass die Richtung des Stromdurchgangs von unten nach oben erfolgt; somit ist an der oberen Fläche jedes Zylinderkopfs 7 ein separater Abgaskrümmer 13 und an der unteren Seite ein Ansaugkrümmer 18 befestigt.

Der Verdichter 12 des Turboladers 8 ist mittels symmetrischer Ladeluftleitungen 19 über zumindest einen Ladeluftkühler 20 mit dem in zwei Teile untergliederten Ansaugkrümmer 18 jedes Zylinderkopfs 7 verbunden. Die Bauteile des Ansaugkrümmers 18 sind über den Luftkanal 21, der eventuelle Druckunregelmäßigkeiten in den Ansaugkrümmern 18 ausgleicht, miteinander verbunden.

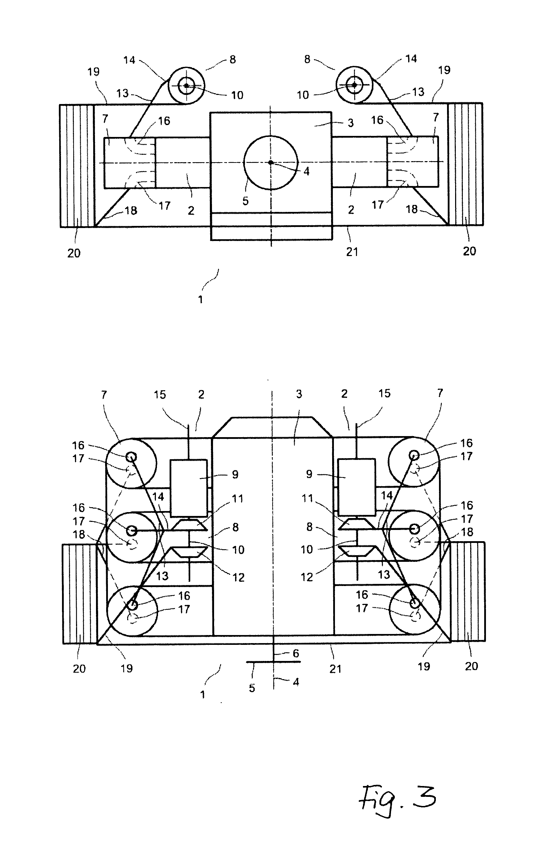

**Fig. 3** zeigt einen Boxermotor 1, dessen Zylinder in zwei Bänken 2 auf einander entgegengesetzten Seiten des Gehäuses 3 angeordnet sind, mit separaten Abgaskrümmern 13 und einem Ansaugkrümmer 18 der Zylinderköpfe 7, der mit zwei Turboladern 8 und zwei Ladeluftkühlern 20 ausgestattet ist.

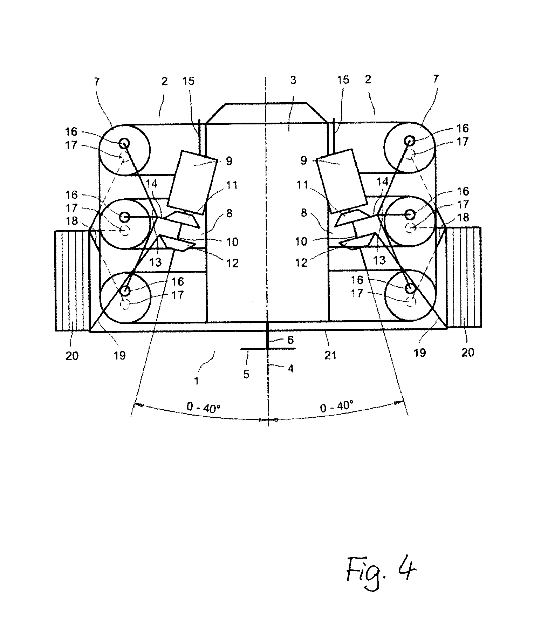

**Fig. 4** eine schematische Darstellung einer Ausführungsform des beanspruchten Boxermotors mit zwei Turboladern 8, die in einem Winkel von 0 - 40° zur Kurbelwellenachse angeordnet sind.

### Bezugszeichenliste

- 1: Boxermotor
- 2: Zylinderbank
- 3: Motorgehäuse
- 4: Kurbelwellenachse
- 5: Riemenscheibe
- 6: Kurbelwelle
- 7: Zylinderkopf
- 8: Turbolader
- 9: Abgaskatalysator
- 10: Turboladerachse
- 11: Turboladerturbine
- 12: Turboladerverdichter
- 13: Separater Abgaskrümmer
- 14: Stutzen der Turboladerturbine
- 15: Abgasrohr
- 16: Auslasskanal des Zylinderkopfs
- 17: Einlasskanal des Zylinderkopfs
- 18: Ansaugkrümmer
- 19: Ladeluftleitung
- 20: Ladeluftkühler
- 21: Ausgleichsluftkanal

## Patentansprüche

1. Boxermotor, bei dem die Zylinder horizontal in zwei Bänken auf einander entgegengesetzten Seiten des Kurbelgehäuses angeordnet sind und jede Zylinderbank einen Zylinderkopf mit Auslass- und Einlasskanälen aufweist, wobei die Einlasskanäle unterhalb und die Auslasskanäle oberhalb des Zylinderkopfs angeordnet sind, der Abgaskrümmer mit den Auslasskanälen des Zylinderkopfs in Verbindung steht, zumindest ein Turbolader mit Abgaskatalysator, der eine Turbine und einen Verdichter umfasst, über dem Gehäuse angeordnet ist, wobei der Abgaskrümmer mit der Turbine des Turboladers verbunden ist, **dadurch gekennzeichnet, dass**
der (die) Turbolader entlang der Kurbelwellenachse angeordnet ist (sind) und der Abgaskrümmer in Form zweier separater Abgaskrümmer, jeweils einer für jeden Zylinderkopf, ausgeführt ist, wobei jeder der Krümmer mit der Turbine des Turboladers bzw. den Turbinen der Turbolader verbunden ist.

2. Boxermotor nach Anspruch 1, **dadurch gekennzeichnet, dass**
der Motor mit zwei Turboladern ausgestattet ist, wobei die Abgaskrümmer der Zylinderköpfe mit den Turbinen der entsprechenden Turbolader verbunden sind.

3. Boxermotor nach Anspruch 1, **dadurch gekennzeichnet, dass**
der Motor mit einem zentralen Turbolader zusätzlich mit zwei weiteren Turboladern ausgestattet ist, deren jeweilige Turbine mit einem entsprechenden Zylinderkopf-Abgaskrümmer in Verbindung steht.

4. Boxermotor nach Anspruch 2 und 3, **dadurch gekennzeichnet, dass**
die beiden Turbolader symmetrisch in einem Winkel zur Kurbelwellenachse von 0 - 40° angeordnet sind.

5. Boxermotor nach Anspruch 1, **dadurch gekennzeichnet, dass**
der Abgaskatalysator unmittelbar und ohne Zwischenleitung mit dem Turbolader verbunden ist.

6. Boxermotor nach Anspruch 1, **dadurch gekennzeichnet, dass**
aufgeheizte Bauteile, insbesondere die Abgaskrümmer, der (die) Turbolader und der Abgaskatalysator, mit einer Wärmedämmung ausgestattet sind, die in unmittelbarem Kontakt mit den aufgeheizten Bauteilen steht.

7. Boxermotor nach Anspruch 1, **dadurch gekennzeichnet, dass**
der Ansaugkrümmer in zwei Teile für jeden Zylinderkopf untergliedert ist und dass beide Teile durch einen Luftkanal, welcher Druckunterschiede ausgleicht, miteinander verbunden sind.

8. Boxermotor nach Anspruch 1, **dadurch gekennzeichnet, dass**
der Verdichter des Turboladers (der Turbolader) über zumindest einen Ladeluftkühler mit einem separaten Teil des Ansaugkrümmers für jeden Zylinderkopf verbunden ist.
